(19) Europäisches Patentamt

European Patent Office

Office européen des brevets

(11) **EP 3 429 166 B1**

(12) **EUROPEAN PATENT SPECIFICATION**

(45) Date of publication and mention
of the grant of the patent:
**08.09.2021 Bulletin 2021/36**

(51) Int Cl.:
*H04L 29/08* *(2006.01)*    *H04L 29/06* *(2006.01)*
*H04W 8/18* *(2009.01)*

(21) Application number: **17181498.1**

(22) Date of filing: **14.07.2017**

(54) **METHOD FOR OPERATING A COMMUNICATION NETWORK**

VERFAHREN ZUM BETREIBEN EINES KOMMUNIKATIONSNETZWERKS

PROCÉDÉ DE FONCTIONNEMENT D'UN RÉSEAU DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2017 EP 17181314**

(43) Date of publication of application:
**16.01.2019 Bulletin 2019/03**

(73) Proprietor: **Weeve GmbH
10555 Berlin (DE)**

(72) Inventor: **ZAPP, Harald
61440 Oberursel (DE)**

(74) Representative: **Ullrich & Naumann PartG mbB
Schneidmühlstrasse 21
69115 Heidelberg (DE)**

(56) References cited:
**WO-A1-2016/057347      US-A1- 2006 056 628
US-A1- 2006 200 444      US-A1- 2014 059 217
US-A1- 2016 366 111**

## Description

FIELD AND BACKGROUND OF THE INVENTION

The present invention relates to a method for operating a communication network.

The present invention further relates to a mediating entity of a communication network.

The present invention further relates to a method for operating an entity in a communication network.

The present invention further relates to a non-transitory computer readable medium storing a program causing a computer to execute a method for operating a communication network and to a non-transitory computer readable medium storing a program causing a computer to execute a method for operating an entity in a communication network.

Even further the present invention relates to a network.

Although applicable to any kind of entities the present invention will be described with entities in the context of Internet of things.

The term "Internet of things" - IOT - may be referred to a global infrastructure for the information society, enabling advanced services by interconnecting physical and virtual things based on existing and evolving interoperable information and communication technologies. A "thing" is an object of the physical world - physical things - or the information world - virtual things -, which is capable of being identified and integrated into communication networks.

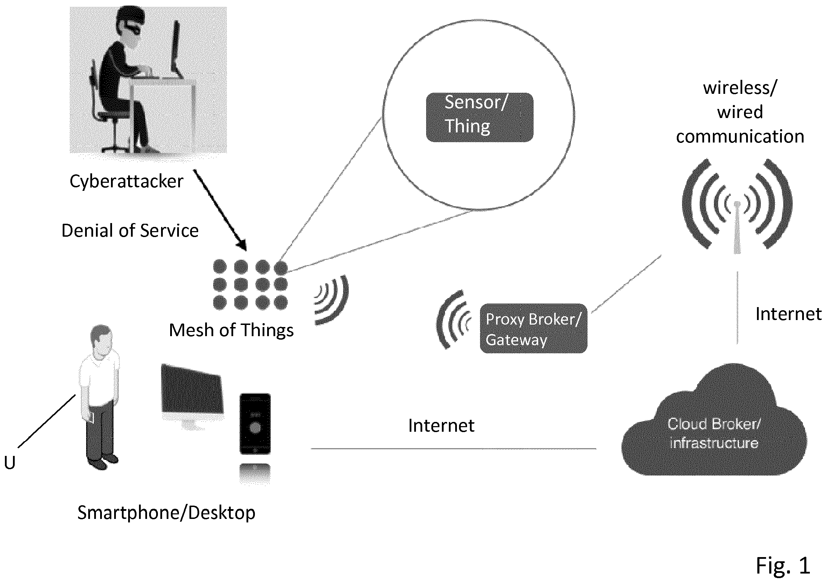

Examples for such things range from intelligent vehicles to toasters, refrigerators or temperature sensors. While the proliferation of Internet-connected things empowers many opportunities, it also opens up technological challenges. One of the challenges is security. Things are connected to the Internet and thus they may be objected to any cyberattack a commodity computing device is. The attacks range from intercepting the communication to denial-of-service attacks. For instance, in a first attack, a remote adversary may attempt to eavesdrop on the communication in order to reveal sensitive data. In an active variant the adversary may manipulate the communication to forge a valid transmission. In the latter attack the attacker intends to overload the IOT network with data, such that the things (or any targeted device) run out of computational resources. For instance a traffic light system denies its service during rush hour, which might cause harm, if traffic lights lack resources to switch on time. Such an attack scenario is shown in figure 1 where an infrastructure like a cloud broker connects over a gateway to mesh of things. The gateway acts as proxy between infrastructure and the Internet of things mesh to balance the load.

For communication between a thing and a requesting infrastructure message-oriented middle-layer protocols have been introduced, including DDS, MQTT, MQTT-SN, CoAPP, AMQP, WebSocket, etc.. MQTT, DDS as well as AMQP support the publish-subscribe paradigm, whereas the other support the client-server paradigm. None of the protocols provides security. To provide security it has been proposed for MQTT and AMQP to run the corresponding protocol over the TLS protocol, a de-facto standard for securing message-oriented middle-layer protocols. However, one of the problems is that TLS has been designed for client-server architectures. It is not suitable for efficient IOT applications. First, establishing a secure communication costs at least 7 communication rounds which causes the battery of an IOT device to be drained with every communication round. Second, the TLS protocol supports a large list of cryptographic algorithms also known as cipher suites to be compatible with various client and server implementations. This results in a large code base. However, space in terms of memory usage is a critical aspect for many IOT devices as it directly relates to the costs of the embedded device. Third, the TLS protocol has been designed for the client-server setting reducing the flexibility. In other words since TLS has been designed with the premise to establish an end-to-end secure communication channel between sender and receiver, any engagement of a third party is considered as a threat that harms the confidentiality, authenticity and message integrity of the communication between client. However in many IOT settings, messages for load balancing, routing etc. have to be brokered by a broker, the broker being responsible for the distribution of messages to distinguished parties (subscribers). Hence a third party - the broker - is actively involved in the communication between the sender and receiver.

Also DDS does not enable per se security. For DDS, extensions for providing security have been proposed, for instance disclosed on http://www.omg.org/spec/DDS-SECURITY/1.0/ . However they establish a secure end-to-end connection which comes with the problems mentioned above for TLS, i.e. brokering of messages is not possible.

In the non-patent literature of Christian Wachsmann, Liqun Chen, Kurt Dietrich, Hans Löhr, Ahrnad-Reza Sadeghi, and Johannes Winter, Lightweight anonymous authentication with TLS and DAA for embedded mobile devices, in Mike Burmester, Gene Tsudik, Spyros S. Magliveras, and Ivana Ilic, editors, Information Security - 13th International Conference, SC 2010, Boca Raton, FL, USA, October 25-28, 2010, Revised Selected Papers, volume 6531 of Lecture Notes in Computer Science, pages 84798, Springer, 2010 a variant of the TLS protocol is shown where the cryptographic procedures are implemented in an hardware-based trusted execution environment.

In the non-patent literature of Steffen Schulz and Ahmad-Reza Sadeghi, Secure vpns for trusted computing environments, In Liqun Chen, Chris J. Mitchell, and Andrew P. Martin, editors, Trusted Computing, Second International Conference, Trust 2009, Oxford, UK, April 6-8, 2009, Proceedings, volume 5471 of Lecture Notes in Computer Science, pages 1977216, Springer, 2009 SSOS, an extension of said variant to virtual private networks is disclosed.

In US 5815665 A trusted brokering services over a distributed network are disclosed, in detail an online brokering service for user authentication and billing.

In US 2014/0172721 A1 an architecture for securing transactions is disclosed. It uses a normal execution environment for the transaction and a trusted execution environment for the confirmation.

In the non-patent literature of Meena Singh, Rajan MA, Shivraj VL, and Balamuralidhar P, Secure MQTT for Internet of Things (IoT), Fifth International Conference on Communication Systems and Network Technologies, 2015, a variant of MQTT is disclosed taking security into account using attribute-based encryption to enable receivers to obtain messages for particular topics expressed in terms of attributes. One of the problems here is limited flexibility since receivers can only obtain content for particular topics, as the topics are hardcoded in the decryption key.

Additional background art is represented by patent publications US 2006/200444 A1, US 2016/366111 A1 and WO 2016/057347 A1.

SUMMARY OF THE INVENTION

Embodiments of the present invention therefore address the problem of reducing the required computational resources, in particular of a battery of an IOT device as well as the memory needed for storing instructions for the security protocol. A further problem addressed by embodiments of the present invention is to provide enhanced flexibility while providing a higher level of security, in particular with regard to non-malleability.

The invention is defined by the subject-matter of the independent claims. Preferred embodiments are defined in the dependent claims.

In an embodiment the present invention provides a method for operating a communication network, 'CN', according to claim 1.

In a further embodiment the present invention provides a mediating entity, 'ME' of a communication network, 'CN', according to claim 11.

In a further embodiment the present invention provides a method for operating a mediating entity, 'ME' comprising a trusted execution environment, 'TCE', in a communication network, 'CN', according to claim 12.

In a further embodiment the present invention provides a non-transitory computer readable medium according to claim 13.

In a further embodiment the present invention provides a non-transitory computer readable medium according to claim 14.

In a further embodiment the present invention provides a network according to claim 15.

At least one embodiment may have at least one of the following advantages:

-   Fewer communication rounds leading to an efficient use of the batteries of IOT devices.
-   Small code base compared with conventional protocols.
-   Enhanced flexibility regarding subscription topics.
-   High general security.
-   Higher security with regard to non-malleability.

In other words in embodiments of the present invention a third party in form of the mediating entity manages subscriptions and distributes messages. The mediating entity acts therefore as man-in-the-middle which is isolated from the other components of the communication network, for example by using hardware enabled trusted execution technologies. The isolation of the mediating entity makes sure that even if the remainder of the communication network and partial components of the mediatior itself are compromised an attacker neither can change the message flow of the mediating entity nor learns sensitive data including cryptographic key material, subscriptions or the like.

The term "message" is to be understood in the most general sense. A "message" may be in particular a data packet or a certain amount of data, which can be sent, exchanged or received by an entity.

The term "data" is to be understood in the broadest sense. Data may for example be a data request, a data response, an embedded object with content, header and content of a HTML page, or the like.

The terms "entity", "mediating entity", "initiating entity" and "responding entity" refer in particular in the claims, preferably in the specification each to a device adapted to perform computing like a personal computer, a tablet, a mobile phone, a server, or the like and comprises one or more processors having one or more cores and may be connectable to a memory for storing one or more applications which is/are adapted to perform corresponding steps of one or more of the embodiments of the present invention. Any application may be software-based and/or hardware-based installed in the memory on which the processor(s) can work on. The devices, entities or the like may be adapted in such a way that the corresponding steps to be computed are performed in an optimized way. For instance different steps may be performed in parallel with a single processor on different of its cores. Further the entity and storage and service entity may be identical forming a single computing device. The device or devices may also be instantiated as a virtual device running on a physical computing resource. Different devices may therefore be executed on said physical computing resource.

The term "computer readable medium" may refer to any kind of medium, which can be used together with a computation device or computer and on which information can be stored. Said information may be any kind of data which can be read into a memory of a computer. For example said information may include program code for executing with said computer. Examples of a computer readable medium are tapes, CD-ROMs, DVD-ROMs, DVD-RAMs, DVD-RWs, BluRay, DAT, MiniDisk, solid state disks SSD, floppy disks, SD-cards, CF-cards, memory-sticks, USB-sticks, EPROM. EEPROM or the like.

The term "computational resource" is to be understood in its broadest sense and refers in particular in the claims, preferably in the specification to any kind of physical and/or virtual computational or compute resource, resource, device, entity or the like adapted to perform computing and which can be used by applications, services, users, etc. to perform certain functions, services, applications or the like. A computational resource may include but is not limited to computes, networks, memories, storages, etc. For instance a compute resource may be a CPU resource that is part of the servers inside the datacenter. Thus a server can have Compute like CPU (or vCPU), Network like Network Interface card (NIC), Memory like RAM and/or Storage like external/internal HDD(s).

The term "trusted computing environment" or "TCE" refers in particular in the claims, preferably in the specification to an entity, device, computing device or a part of isolating and protecting security-critical logic from all other hardware and software running on an entity or server. A trusting computing entity provides confidentiality and integrity protection for a trusted application running within a trusted execution environment respectively on said trusting computing entity, ensuring that no application running outside said trusted execution environment can interfere with the trusted application's operation. The trusted execution environment provided or spanned by a trusted computing entity may provide some form of remote attestation allowing remote users to certain the current configuration and behavior of a trusted application. The trusted execution environment may be provided in form of a central processing unit or the like.

The terms "publishing" and "subscribing" are to be understood in their broadest sense and refer in particular in the claims, preferably in the specification to the publish-subscribe paradigm being a messaging pattern where senders of messages, called publishers, do not program the messages to be sent directly to specific receivers, called subscribers, but instead specify published messages into classes without knowledge of which subscribers, if any, there may be. Similarly, subscribers express interest in one or more classes and only receive messages that are of interest, without knowledge of which publishers, if any, there are.

The term "secure connection" this is to be understood in its broadest sense and refers in particular in the claims, preferably in the specification to a connection between two entities which is secured or has at least a certain level of security against an attacker trying to get access to the data transferred via the connection.

The term "topic" and "topic information" are to be understood in their broadest sense and refer to data, information, data classes, logical channels or the like.

For instance subscribers receive all messages published to the topics to which they subscribe, and e.g. all subscribers to a topic will receive the same messages. The publisher may be responsible for defining the topics of messages to which subscribers can subscribe.

The term "content" is to be understood in its broadest sense and refers in particular in the claims, preferably in the specification to information, data, etc. included into a message for further processing. For instance the content of a subscribing message is topic information specifying the topic to be subscribed.

The term "quality of service" is to be understood in its broadest sense and refers in particular in the claims, preferably in the specification to a description or measurement of certain parameters indicating a performance of a service, such as a computer network or a cloud computing service, particularly the performance seen by the users of the computer network. For instance parameters for quality of service may be but are not limited to error rates, bit rate, throughput, transmission delay, availability, jitter, roundtrip times, etc.

The term "critical" with regard to the term "content" is to be understood in its broadest sense and refers in particular in the claims, preferably in the specification to content to which access is granted only for a limited number of persons, entities or the like. In other words critical content is content which is not deemed for anyone to have access to.

The term "certificate" is to be understood in its broadest sense and refers in particular in the claims, preferably in the specification to a public key certificate, also known as a digital certificate or identity certificate, being an electronic document used to prove the ownership of a public key. The certificate includes information about the key, information about the identity of its owner, called the subject, and the digital signature of an entity that has verified the certificate's contents, called the issuer. If the signature is valid, and the software or hardware entity examining the certificate trusts the issuer, then it can use that key to communicate securely with the certificate's subject.

The term "symmetric key" with regard to the term "encryption scheme" refers in particular in the claims, preferably in the specification to a scheme using the same cryptographic keys for both encryption of plaintext and decryption of ciphertext. The keys may be identical or there may be a simple transformation to go between the two keys.

Further features, advantages and further embodiments are described or may become apparent in the following:
Successful publishing and/or subscribing may be acknowledged by providing back an ack message. This enhances the reliability of the communication between two entities.

Message reliability Information indicating a level of assurance of the message transmission may be included in said ack message. This enables the sender of the message and the receiver of the ack message to determine a level of reliability that the message has been successfully transmitted. For instance the receiver of said ack message can determine whether the message is delivered exactly once such that duplicate messages have not been delivered.

A secure message connection between said IE and said ME may be established and said message from said IE to said ME is transmitted via said secure connection. This ensures a high level of security since communication between the participating entities is secured.

Publishing may be performed by providing a publish message to said ME being authenticated and/or encrypted including topic information and content associated with said topic information. This enhances the flexibility since different parties can subscribe to a topic and a responding entity like the sensor or the like can simply publish content associated with a topic such that the subscribing entities can be informed about the content for a topic.

Subscribing may be performed by sending a subscribe message to said ME comprising topic information to be subscribed. This enables a reliable and easy subscribing to topics for an initiating entity.

Quality of service information may be included into said publish message and/or said subscribe message. This enhances that reliability since a desired quality of service can be provided when publishing and subscribing.

For unsubscribing from a topic a message, preferably via an established secure message connection, may be sent to said ME comprising topic information for unsubscribing. This allows an easy unsubscribing from a topic or a set of topics.

Said message for said RE from said IE may be evaluated with regard to critical content and wherein if critical content is not determined, the message is directly forwarded to said RE. This enables to distinguish between uncritical and critical content and critical content may be subject to secure communication and secure subscribing and publishing, whereas uncritical content may be directly relayed. Thus efficiency is enhanced while providing a high level of security.

A secure message connection may be established by sending a connect message including a digital signature and a trusted certificate, preferably wherein a successful established secure message connection is acknowledged. This enables an easy set-up of the secure connection between two entities via said connect message.

A secure message connection may be based on encrypting and decrypting of messages using a symmetric-key authenticated encryption scheme. In other words encryption and decryption may be based on a symmetric key authenticated encryption scheme. This enables an efficient and simple encryption/decryption scheme.

There are several ways how to design and further develop the teaching of the present invention in an advantageous way. To this end it is to be referred to the patent claims subordinate to the independent claims on the one hand and to the following explanation of further embodiments of the invention by way of example, illustrated by the figure on the other hand. In connection with the explanation of the further embodiments of the invention by the aid of the figure, generally further embodiments and further developments of the teaching will be explained.

BRIEF DESCRIPTION OF THE DRAWINGS In the drawings

Fig. 1          shows a conventional IOT scenario;

Fig. 2          shows steps of a method according to an embodiment of the present invention;

Fig. 3a-c      show steps of parts of a method according to an embodiment of the present invention;

Fig. 4          shows steps of a secure messaging establishment according to an embodiment of the present invention;

Fig. 5          shows steps of a secure messaging acknowledgment according to an embodiment of the present invention;

Fig. 6          shows steps of a secure publication according to an embodiment of the present invention;

Fig. 7          shows steps of a secure publication acknowledgment according to an embodiment of the present invention;

Fig. 8          shows steps of a secure publication reception according to an embodiment of the present invention;

Fig. 9          shows steps of a secure subscription according to an embodiment of the present invention;

Fig. 10         shows steps of a secure subscription acknowledgment according to an embodiment of the present invention;

Fig. 11         shows steps of a secure subscription reception according to an embodiment of the present invention;

Fig. 12         shows steps of a secure unsubscription according to an embodiment of the present invention;

Fig. 13     shows steps of a secure unsubscription acknowledgment according to an embodiment of the present invention;

Fig. 14     shows steps of a secure unsubscription reception according to an embodiment of the present invention; and

Fig. 15     shows steps of a secure disconnection according to an embodiment of the present invention.

DETAILED DESCRIPTION Figure 1 shows a typical IOT scenario.

In Figure 1 a conventional typical IOT scenario is shown where an infrastructure connects over a gateway to a mesh of things. The gateway acts as proxy between the infrastructure and the IOT mesh to balance the load for instance a user U connected via the Internet to the cloud broker which is in turn connected to the proxy broker. The proxy broker is connected to the things of said IOT mesh.

An attacker would for example perform eavesdropping, alternation or denial-of-service attacks on the system architecture shown in Figure 1 in order to reveal sensitive data.

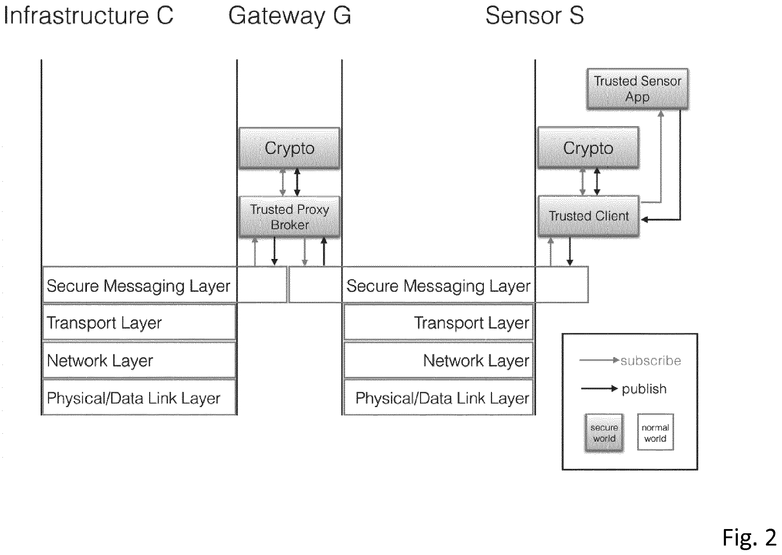

Figure 2 shows steps of a method according to an embodiment of the present invention.

In Figure 2 an illustration of a system architecture according to an embodiment of the present invention is shown.

Embodiments of the present invention are based on the publish-subscribe paradigm wherein a party subscribes at a broker for some topic. Each time a peer publishes content matching the topic, the broker provides the content to the subscriber.

The parties shown in Figure 2 are

-     an infrastructure C hosting a cloud backend
-     a gateway G being the mediator between the infrastructure and the target sensor S or set thereof, and
-     a sensor S implementing the functionality of the thing

Infrastructure C, gateway G and sensor S may have different roles throughout their life-time. A communication may be initiated by either the infrastructure C, gateway G or the sensor S. A party initiating the communication is denoted as the initiator I and the peer of the communication is denoted as the responder R. Hence, the responder R may be the infrastructure I, gateway G or sensor S. A party in the middle of the initiator I and the responder R is denoted as the mediator M. In the embodiment here the gateway G acts in the role of the mediator M.

At the gateway G and at the sensor S a hardware protection supporting the normal-secure world trusted execution environment is used. It enables through a monitor a limited communication from the "normal world" to the "secure world", and vice versa. The hardware essentially isolates the "normal world" from the secure or trusted execution environment.

Fig. 2 now illustrates the system architecture for the establishment of an end-to-end secure messaging mechanism between the infrastructure C and the sensor S. Non-critical system modules are isolated from the critical ones. The non-critical modules comprise e.g. the standard networking protocols, i.e. the whole protocol stack from the physical layer to the transport layer. They run in the "normal world" of the gateway G and sensor S. The critical components are those that are responsible for executing the secure messaging protocol and the execution of the sensor-specific app in the sensor S. They run in the "secure world" of the gateway G and sensor S and include the following modules:

-     A trusted proxy broker implements the gateway's proxy functionality. It parses the secure messaging protocols, forwards any cryptographic operation to a crypto module, and proxies the secure communication. For proxying it securely stores a subscription table, e.g. list associating topics with sensors.
-     A crypto module implements the cryptographic algorithms as well as a trusted storage to store the cryptographic key material. The crypto module can be implemented both in hardware and/or software.
-     A trusted client implements the sensor's functionality to parse the secure messaging protocol. It forwards any cryptographic operation to a sensor's crypto module. Once the message plaintext after decryption by the sensor's crypto module is available the trusted client forwards the message to the trusted app. Vice versa, it may receive from the trusted app the instruction to establish a secure channel.
-     A trusted app runs at the sensor S and implements the logic of the sensor S.

When the trusted gateway G receives a message for the infrastructure C or some sensor S, it proceeds as follows:

1. A gateway's pyhsical/data link layer module parses in the "normal world" the message and sends it to a network layer module.

2. The gateway's network layer module processes the message and forwards the output to a transport layer module in the "normal world".

3. The gateway's transport layer module processes the output in the "normal world" and forwards the output to the secure messaging layer module.

4. The gateway G then runs the trusted proxy broker to process the secure messaging protocol. The trusted proxy broker comprises a list of subscriptions stored in a secure way. Each subscription defines the topics a sensor has subscribed for. Based on the list, the broker decides, if the initiator of the protocol is authorized to communicate with the sensor S or the infrastructure C. If so, the gateway G proceeds with steps 5-8. In the following it is assumed that the message is received from the infrastructure I for the sensor S.

5. The gateway's trusted proxy broker creates a secure messaging connection to the sensor S.

6. The gateway's trusted proxy broker sends the secured message to the transport layer module in the "normal world".

7. The gateway's transport layer model processes the message and passes it to the network layer module.

8. The gateway's network layer module processes the messages and sends it to the physical/data link layer module, where it is send out to the Sensor S.

9. The sensor S then repeats steps 1-4 in the normal world with the exception that the trusted client in the secure world parses the secure messaging protocol. Once the message cleartext is available the trusted client feeds the trusted sensor application with the message.

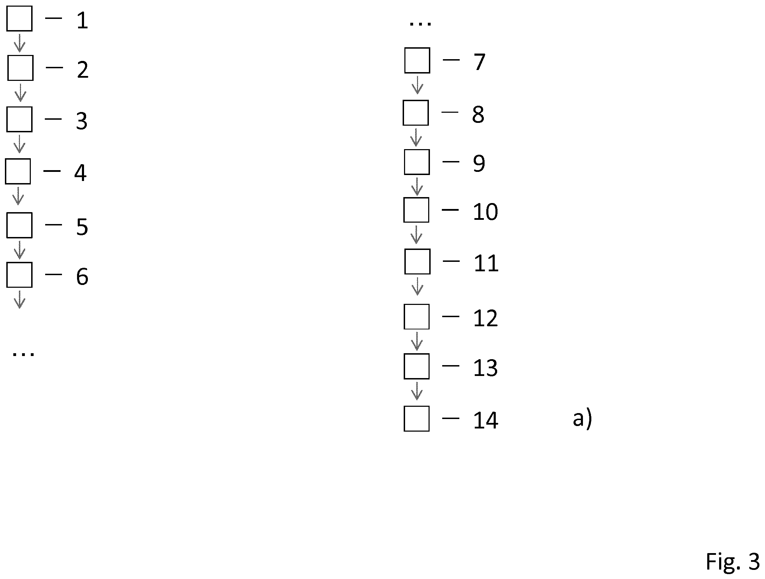

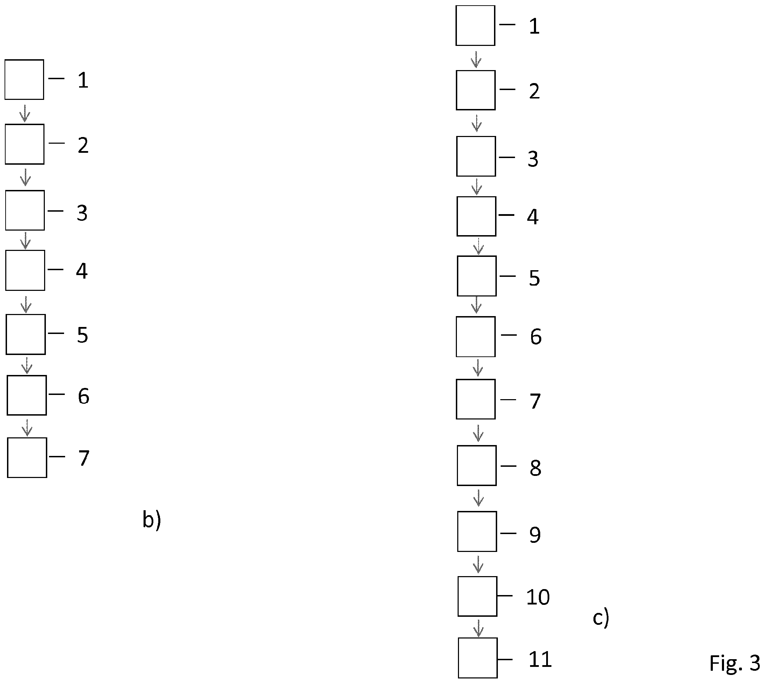

Fig. 3a, 3b and 3c show steps of parts of a method according to an embodiment of the present invention.

In Fig. 3a steps for sending a message from an initiating entity to a processing entity, processing and sending back the result to said initiating entity are shown.

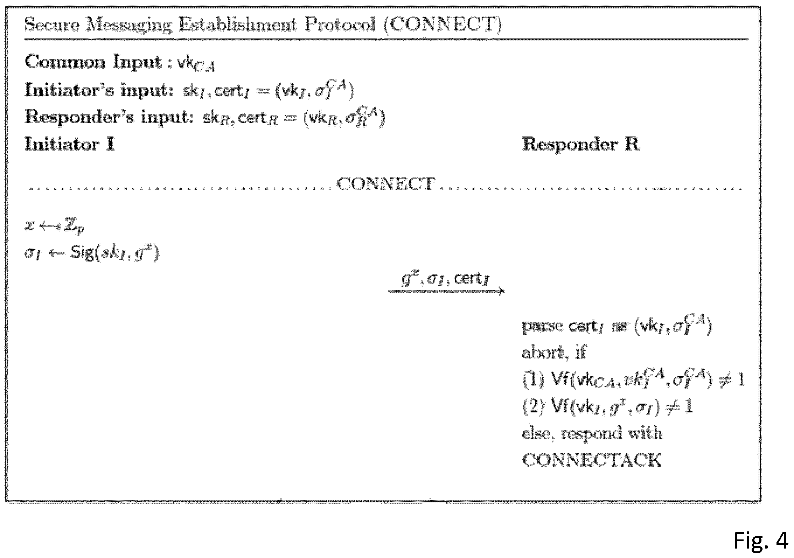

In a first step 1 the initiator/initiating entity/infrastructure C uses the CONNECT message according to Fig. 4 to initiate a secure message protocol between an entity of the infrastructure C and the gateway G.

In a second step 2 said CONNECT message is received by the gateway G which establishes a secure connection between the gateway G and the infrastructure C.

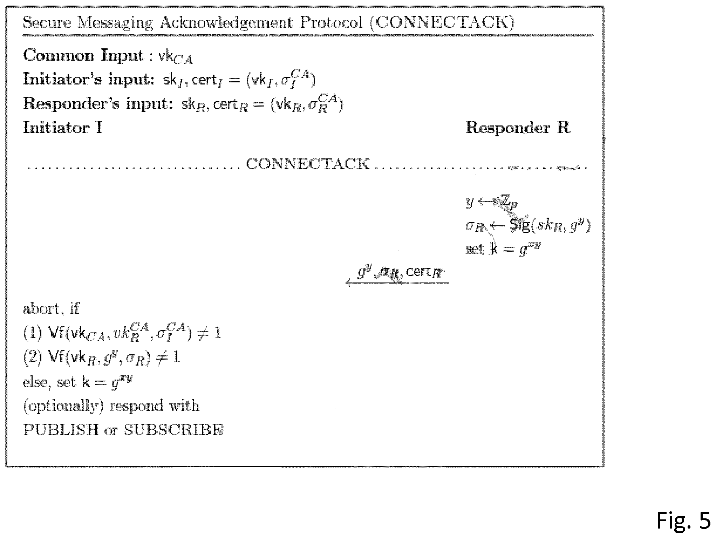

In a third step 3 after successful establishing a secure connection between the infrastructure C and the gateway G a CONNECTACK according to Fig. 5 is sent from the gateway G to the infrastructure C.

In a fourth step 4 the gateway G checks whether the infrastructure C is entitled to communicate with the sensor S.

In a fifth step 5 in case the infrastructure C is entitled to communicate with the sensor S the gateway G initiates using a second CONNECT message according to Fig. 4 a secure message protocol between the gateway G and the sensor S.

In a sixth step 6 said CONNECT message is received by the sensor S.

In a seventh step 7 after successful establishing a secure connection between the gateway G and the sensor S a CONNECTACK according to Fig. 5 is sent from the sensor S to the gateway G.

In an eighth step 8 the message to be sent is transmitted from the infrastructure C to said gateway G using the established secure connection between infrastructure and gateway G.

In a ninth step 9 at least the content of the said message received by said gateway G is transmitted via the established secure connection to said sensor S.

In a tenth step 10 the content of said message received by the sensor S is executed by an application of the sensor S.

In an eleventh step 11 the result of the processed content of said message is sent from the sensor S to the gateway G via the established secure message connection between sensor S and gateway G.

In a twelfth step 12 the gateway G receives the result via said established secure message connection between sensor S and gateway G and

in a thirteenth step 13 the gateway G sends the received result to the infrastructure C via the established secure message connection between gateway G and infrastructure C.

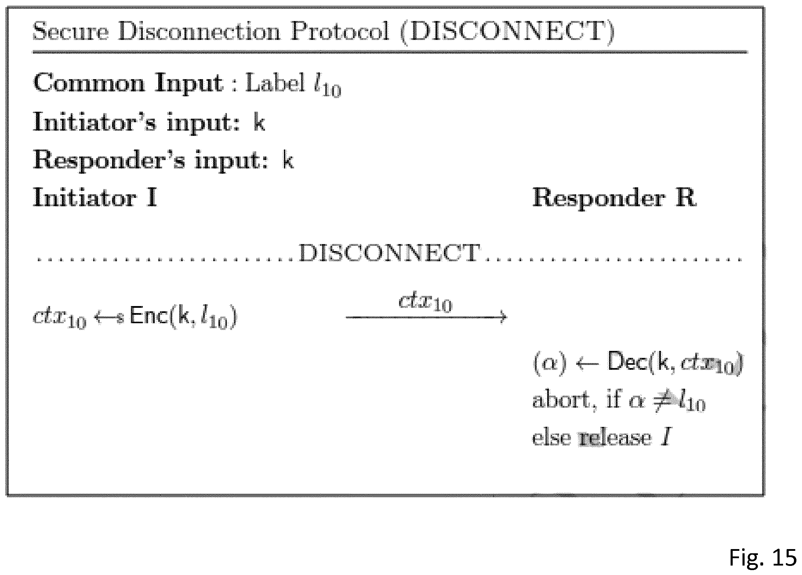

Further In an optional fourteenth step 14 the infrastructure C may disconnect with a DISCONNECT message according to Fig. 15 from the gateway G and/or the sensor S may disconnect with a DISCONNECT message according to Fig. 15 from the gateway G.

In Fig. 3b steps for subscribing to a topic are shown.

In a first step 1 an entity of the infrastructure C uses the CONNECT message according to Fig. 4 to initiate a secure message protocol between the infrastructure C and the gateway G.

In a second step 2 said CONNECT message is received by the gateway G which establishes a secure connection between the gateway G and the infrastructure C.

In a third step 3 after successful establishing a secure connection between the infrastructure C and the gateway G a CONNECTACK message according to Fig. 5 is sent from the gateway G to the infrastructure C.

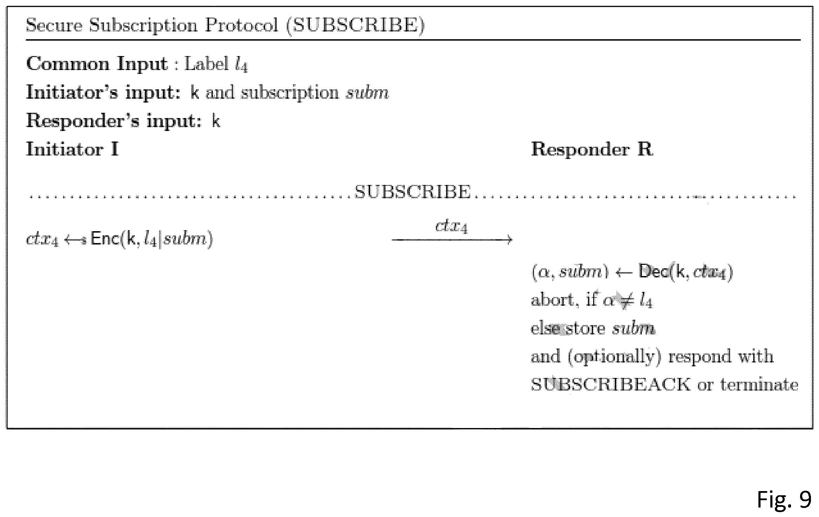

In a forth step 4 the entity of the infrastructure C sends a SUBSCRIBE message according to Fig. 9 to the gateway G using the established secure connection

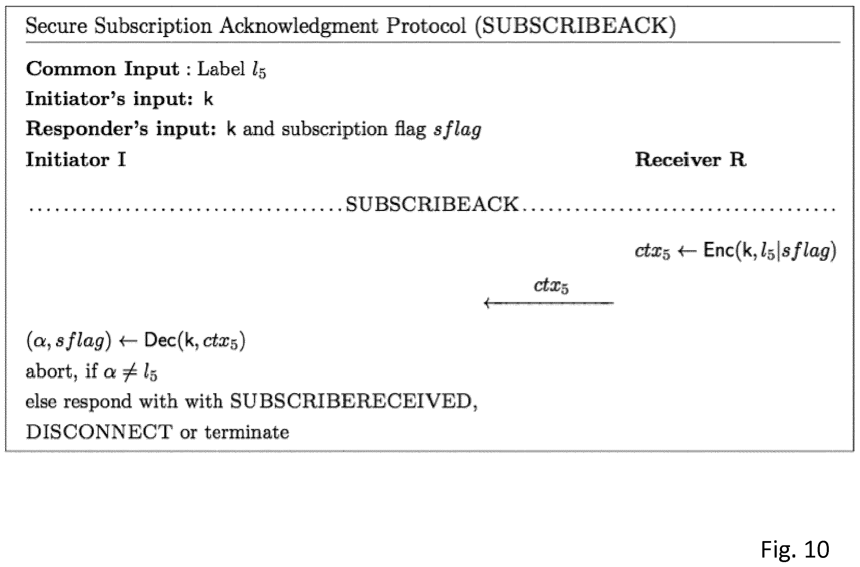

In a fifth step 5 the gateway G receives said SUBSCRIBE message and acknowledges reception of said SUBSCRIBE message with a SUBSCRIBEACK message according to Fig. 10 back to the entity of the infrastructure C.

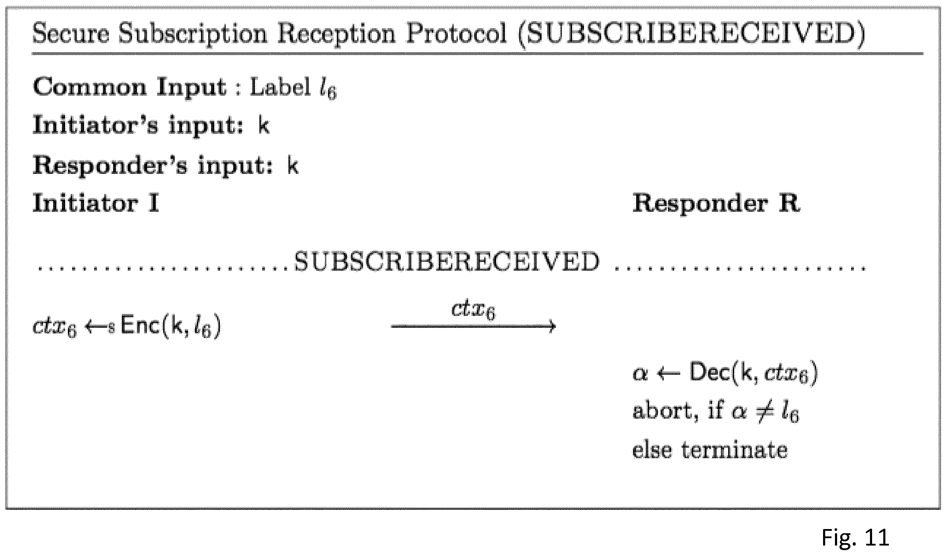

Additionally the infrastructure C may then send an acknowledgment message for receiving said SUBSCRIBEACK message using a SUBSCRIBERECEIVED message according to Fig. 11 to the gateway G.

In a sixth step 6 the gateway G checks whether the infrastructure C is entitled to receive results of the sensor S according to the received request for subscription.

In a seventh step 7 upon a positive result the gateway G stores securely the requested subscription for a topic.

In Fig. 3c steps for publishing a result according to an embodiment of the present invention are shown.

In a first step 1 the initiator - here the sensor S - uses the CONNECT message according to Fig. 4 to initiate a secure message protocol between the sensor S and the gateway G.

In a second step 2 said CONNECT message is received by the gateway G which establishes a secure connection between the gateway G and the sensor S.

In a third step 3 after successful establishing a secure connection between the sensor S and the gateway G a CONNECTACK message according to Fig. 5 is sent from the gateway G to the sensor S.

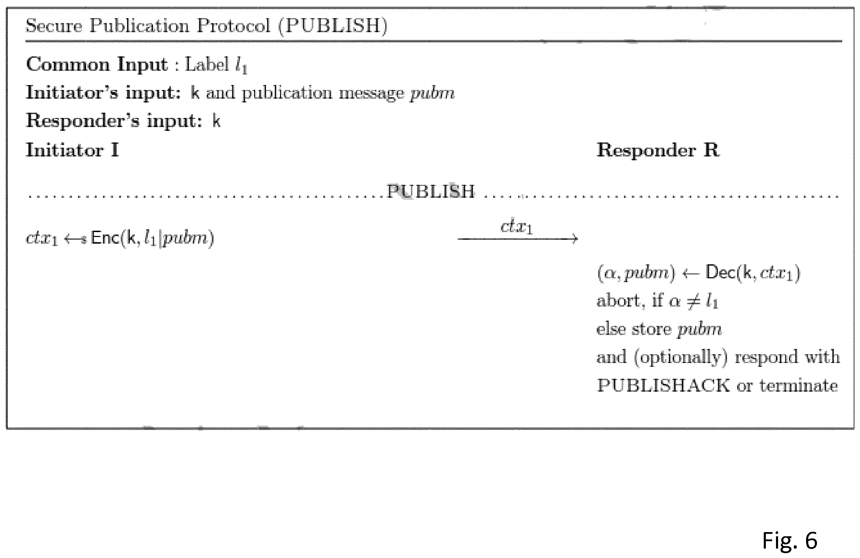

In a forth step 4 the sensor S sends a PUBLISH message according to Fig. 6 to the gateway G.

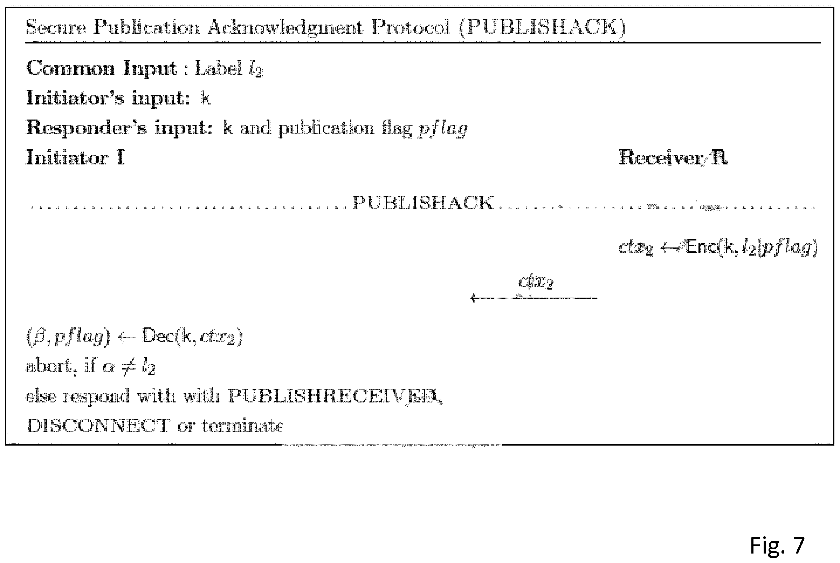

In a fifth step 5 the gateway G receives said PUBLISH message and acknowledges reception of said PUBLISH message with a PUBLISHACK message according to Fig. 7.

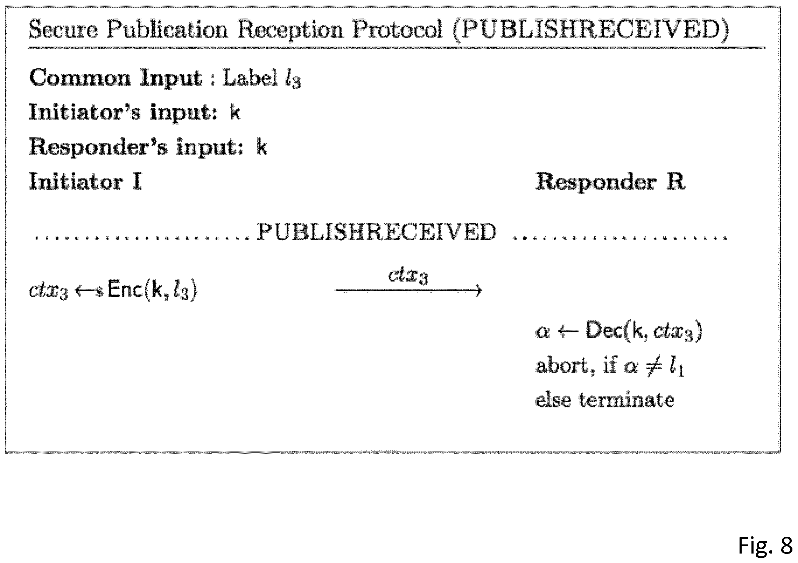

Additionally the sensor S may then send an acknowledgment message for receiving said PUBLISHACK message using a PUBLISHRECEIVED message according to Fig. 8 to the gateway G.

In a sixth step 6 the gateway G checks whether a subscription to a topic related to the processed result of the sensor S, the contents of the PUBLISH message, is securely stored.

In a seventh step 7 upon a positive result the gateway G may provide the securely stored result, i.e. the contents for said topic, to the infrastructure C having a subscription for said topic for instance using the following steps 8-11:

In an eighth step 8 the initiator - here the gateway G - uses the CONNECT message according to Fig. 4 to initiate a secure message protocol between the gateway G and the infrastructure C having a valid subscription.

In a ninth step 9 said CONNECT message is received by the infrastructure C which establishes a secure connection to the gateway G.

In a tenth step 10 after successful establishing a secure connection between the infrastructure I and the gateway G a CONNECTACK message according to Fig. 5 is sent from the infrastructure I to the gateway G.

In an eleventh step 11 the gateway G transmits the published result for the subscribed topic via said secure connection to said infrastructure I.

The embodiments of Fig. 3a-3c use or may make use of SUBSCRIBEACK, SUBSCRIBERECIEVED, PUBLISHACK and PUBLISHRECIVED. In general throughout the description acknowledgment messages, e.g. SUBSCRIBEACK or PUBLISHACK, as well as acknowledgement messages for the acknowledgement messages, i.e. SUBSCRIBERECIEVED or PUBLISHRECIVED are optional.

In the following Fig. 4-15 in detail the specification for the procedures for connecting, publishing, subscribing etc. are described. The notations are as follows: G denotes a group of prime order p and g the generator of the group. (Sig, Vf) denotes the signing and verification algorithms of a digital signature scheme. (Enc,Dec) denotes an encryption and decryption algorithm of a symmetric-key authenticated encryption scheme. Further in the following it is assumed that party i obtained a digital certificate $\text{cert} = (vk_i, \sigma_i^{CA})$ where $\sigma_i^{CA}$ is a digital signature issued by a trusted third party, i.e. verifiable under the publicly available verification key $vk_{CA}$, over the party's signature verification key $vk_i$. Further n denotes the security parameter. If S is a set, $x \leftarrow S$ denotes that x is chosen uniformly from S. If A is a randomized algorithm, then $y \leftarrow A(x)$ denotes running A on input x with a uniform random tape and assigning the output to y. By x|y the concatenation of two strings x, y is denoted.

The secure messaging protocol comprises the following twelve subprotocol messages:

1. CONNECT: This message initiates the secure messaging protocol.

2. CONNECTACK: This message acknowledges the initiation of secure messaging.

3. PUBLISH: This message sends a publish message in a private and authenticated way. The purpose of the message is to publish content for a topic. It contains the topic name, content and desired quality of service, abbreviated as the message pubm.

4. PUBLISHACK: This message acknowledges the reception of the publish message with a flag pflag. If pflag = 0, it is guaranteed that the message was delivered at most one time. If pflag = 1, it is guaranteed that a message was delivered at least once to the receiver. If pflag = 2, then it is guaranteed that the message was delivered only once. If pflag = $\perp$, then a transmission error occurred and an error code may be attached.

5. PUBLISHRECEIVED: This publish received message is the response to a PUBLISHACK where the pflag = 2. This guarantees that a message is received only once.

6. SUBSCRIBE: This message sends a subscription message in a private and authenticated way. The purpose of the message is to subscribe to a topic or set thereof. The subscription request comprises a list of topic name and desired quality of service, abbreviated by message unsubm.

7. SUBSCRIBEACK: This message acknowledges the reception of the subscription message with a flag uflag. If uflag = 0, then it is guaranteed that the message was delivered at most one time. If uflag = 1, it is guaranteed that a message was delivered at least once. If uflag = 2, then it is guaranteed that the message was delivered only once. If uflag = ⊥, then an unsubscription error occurred and an error code may be attached.

8. SUBSCRIBERECEIVED: This subscribe received message is the response to a SUB-SCRIBEACK where the uflag = 2. This guarantees that a message was received only once.

9. UNSUBSCRIBE: This message sends an unsubscribe message in a private and authenticated way. The purpose of the message is to unsubscribe from a topic or a list thereof. The unsubscription request comprises an arbitrary number of topics the sender wishes to unsubscribe from.

10. UNSUBSCRIBERECEIVED: This unsubscribe received message is the response to a SUB-SCRIBEACK where the sflag = 2. This guarantees that a message was received only once.

11. UNSUBSCRIBEACK: This message acknowledges the unsubscription message with a flag uflag. If sflag = 0, then it is guaranteed that the message was delivered at most one time. If sflag = 1, it is guaranteed that a message was delivered at least once. If sflag = 2, then it is guaranteed that the message was delivered only once. If sflag = ⊥, then a subscription error occurred and an error code may be attached.

12. DISCONNECT: This final message indicates that an initiator I disconnecting cleanly from the network.

Fig. 4 shows steps of a secure messaging establishment according to an embodiment of the present invention.

In Fig. 4 a description of a secure messaging establishment protocol is shown.

The protocol runs between an initiator I and a responder R and comprises the following steps:

1. the initiator I chooses a random integer $x \leftarrow \mathbb{Z}_p$,
2. the initiator I generates a digital signature $\sigma_I \leftarrow$ Sig($sk_I$, $g^x$) by running a digital signature algorithm Sig on input its secret key $sk_I$ and message $g^x$,
3. the initiator I sends $g^x$, en and his digital certificate certi to the responder R,
4. upon reception of the tuple ($g^x$, $\sigma_I$, cert$_I$), the responder R verifies

(a) the validity of certi by running the verification algorithm Vf with the trusted third party's verification key $vk_{CA}$ over the initiator's verification key $vk_I$, and
(b) the validity of the tuple ($g^x$, $\sigma_I$) by running the verification algorithm Vf with the initiator's verification key $vk_I$ over $g^x$.

If any of the checks fails, the responder aborts the protocol, by sending a DISCONNECT message as e.g shown in Fig. 15. Otherwise, it continues to respond with a CONNECTACK message as shown in Fig. 5.

Fig. 5 shows steps of a secure messaging acknowledgment according to an embodiment of the present invention.

In Fig. 5a description of a secure messaging acknowledgement protocol is shown.

The protocol runs between the receiver R and the initiator I and comprises following steps:

1. The responder R chooses a random integer $y \leftarrow \mathbb{Z}_p$,

2. the responder R generates a digital signature $\sigma_R \leftarrow$ Sig($sk_R$, $g^y$) by running the digital signature algorithm Sig on input its secret key $sk_R$ and message $g^y$,
3. the responder computes the temporal key k = $g^{xy}$,
4. the responder sends $g^y$, $\sigma_R$ and his digital certificate cert$_R$ to the initiator I,
5. upon reception of the tuple ($g^y$, $\sigma_R$, cert$_R$), the initiator I verifies

(a) the validity of cert$_R$ by running the verification algorithm Vf with the trusted third party's verification key $vk_{CA}$ over the responder's verification key $vk_R$, and
(b) the validity of the tuple ($g^y$, $\sigma_R$) by running the verification algorithm Vf with the responder's verification key $vk_R$ over $g^y$.

If any of the checks fails, the initiator I aborts the protocol. Otherwise, it computes the temporal key k = $g^{xy}$. It also may continue to respond with a SUBSCRIBE message as e.g. shown in Fig. 9 or PUBLISH message as shown in Fig. 6.

Fig. 6 shows steps of a secure publication according to an embodiment of the present invention.

In Fig. 6 a description of a secure publication protocol is shown.

The protocol runs between the initiator I and responder R and comprises the following steps:

1. The initiator I encrypts his message pubm with $ctx_1 \leftarrow$ Enc(k, $I_1$|pubm) where $I_1$ is a pre-defined label,
2. The initiator I sends the $ctx_1$ to the responder R,
3. The responder R decrypts the cyphertext $ctx_1$ with his k by running ($\alpha$, pubm) $\leftarrow$ Dec(k, $ctx_1$),

- If $\alpha \neq I_1$ the responder R aborts with an error.
- Else if $\alpha = I_1$ the responder R stores pubm and responds with a PUBLISHACK as e.g. shown in Fig. 7 message or it terminates.

Fig. 7 shows steps of a secure publication acknowledgment according to an embodiment of the present invention.

In Fig. 7 a description of a secure publication acknowledgement protocol is shown.

The protocol runs between the initiator I and responder R and comprises the following steps:

1. The responder R encrypts his message pflag with $ctx_2 \leftarrow Enc(k, I_1|pubm)$ where $I_2$ is a pre-defined label,

2. The responder R sends the ciphertext $ctx_2$ to the initiator I, and

3. Upon reception, the initiator I decrypts the ciphertext $ctx_2$ with his key k by running $(\alpha, pflag) \leftarrow Dec(k, ctx_2)$.

- If $\alpha \neq I_2$ the initiator I aborts with an error.
- Else if $\alpha = I_2$, the initiator I parses pflag. Depending on the value of pflag, the initiator may run PUBLISHRECEIVED as e.g. shown in Fig. 8, DISCONNECT as e.g. shown in Fig. 15 or terminates.

Fig. 8 shows steps of a secure publication reception according to an embodiment of the present invention.

In Fig. 8 a description of a secure publication reception protocol is shown.

The protocol runs between the initiator I and responder R and comprises the following steps:

1. The initiator I encrypts $I_3$ with $ctx3 \leftarrow Enc(k, I_3)$ where $I_3$ is a pre-defined label,

2. The initiator I sends the ciphertext $ctx_3$ to the responder R,

3. The responder R decrypts the ciphertext $ctx_3$ with his k by running $\alpha \leftarrow Dec(k, ctx_3)$.

- If $\alpha \neq I_3$ the responder R aborts with an error.
- Else if $\alpha = I_3$ the responder R terminates.

Fig. 9 shows steps of a secure subscription according to an embodiment of the present invention.

In Fig. 9 a description of a secure subscription protocol is shown.

The protocol runs between the initiator I and responder R and comprises the following steps:

1. The initiator I encrypt his subscription request subm with $ctx_4 \leftarrow Enc(k, I_4|subm)$.

2. The initiator I sends the ciphertext $ctx_4$ to the responder R.

3. The responder R decrypts the ciphertext $ctx_4$ with his key k by running $(\alpha, subm) \leftarrow Dec(k, ctx_4)$.

- If $\alpha \neq I_4$ the responder R aborts with an error.
- Else, if $\alpha = I_4$ the responder R stores subm and responds with a SUBSCRIBEACK message as e.g. shown in Fig. 10 or terminates.

Fig. 10 shows steps of a secure subscription acknowledgment according to an embodiment of the present invention.

In Fig. 10 a description of a secure subscription acknowledgement protocol is shown.

The protocol runs between the initiator I and responder R and comprises the following steps:

1. The responder R encrypts his message sflag with $ctx_5 \leftarrow Enc(k, I_5|subm)$, where $I_5$ is a pre-defined label.

2. The responder R sends the ciphertext $ctx_5$ to the initiator I.

3. Upon reception, the initiator I decrypts the ciphertext $ctx_5$ with his key k by running $(\alpha, sflag) \leftarrow Dec(k, ctx_5)$.

- If $\neq I_5$ the initiator I aborts with an error.
- Else if $\alpha = I_2$, the initiator I parses sflag. Depending on the value of sflag, the initiator may run SUBSCRIBERECEIVED as e.g. shown Fig. 11, DISCONNECT as e.g. shown in Fig. 15 or terminates.

Fig. 11 shows steps of a secure subscription reception according to an embodiment of the present invention.

In Fig. 11 a description of a secure subscription reception protocol is shown.

The protocol runs between the initiator I and responder R and comprises the following steps:

1. The initiator I encrypts $I_6$ with $ctx_6 \leftarrow Enc(k, I_6)$ where $I_6$ is a pre-defined label.

2. The initiator I sends the ciphertext $ctx_6$ to the responder R.

3. The responder R decrypts the ciphertext $ctx_6$ with his k by running $\alpha \leftarrow Dec(k, ctx_6)$.

- If $\alpha \neq I_6$ the responder R aborts with an error.
- Else if $\alpha = I_6$ the responder R terminates.

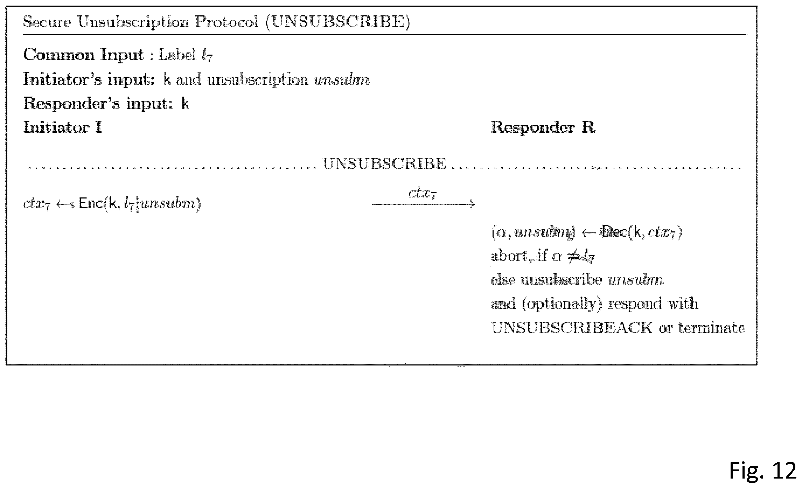

Fig. 12 shows steps of a secure unsubscription according to an embodiment of the present invention.

In Fig. 12 a description of a secure unsubscription protocol is shown.

The protocol runs between the initiator I and responder R and comprises the following steps:

1. The initiator I encrypts his unsubscription request

unsubm with $ctx_7 \leftarrow Enc(k, I_7|unsubm)$.

2. The initiator I sends the ciphertext $ctx_7$ to the responder R,

3. The responder R decrypts the ciphertext $ctx_7$ with his key k by running $(\alpha, unsubm) \leftarrow Dec(k, ctx_7)$.

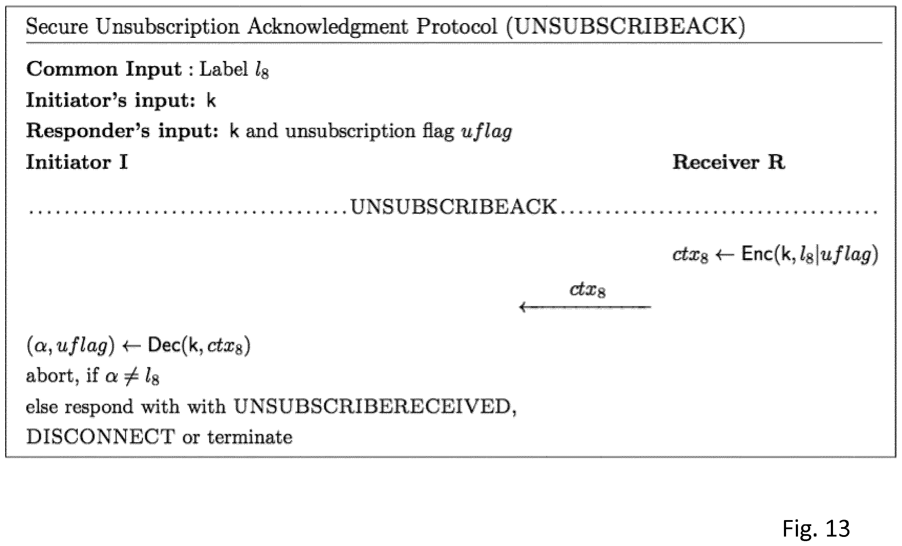

- If $\neq I_7$ the responder R aborts with an error.
- Else, if $\alpha = I_7$ the responder R unsubscribes unsubm from the list of topics associated with that party. It responds with an UNSUBSCRIBEACK message as e.g. shown in Fig. 13 or terminates.

Fig. 13 shows steps of a secure unsubscription acknowledgment according to an embodiment of the present invention.

In Fig. 13 a description of the secure unsubscription acknowledgement protocol is shown.

The protocol runs between the initiator I and responder R and comprises the following steps:

1. The responder R encrypts his message uflag with $ctx_8 \leftarrow Enc(k, I_8|uflag)$ where $I_8$ is a pre-defined label.

2. The responder R sends the ciphertext $ctx_8$ to the initiator I.

3. Upon reception, the initiator I decrypts the ciphertext $ctx_8$ with his key k by running $(\alpha, uflag) \leftarrow Dec(k, ctx_8)$.

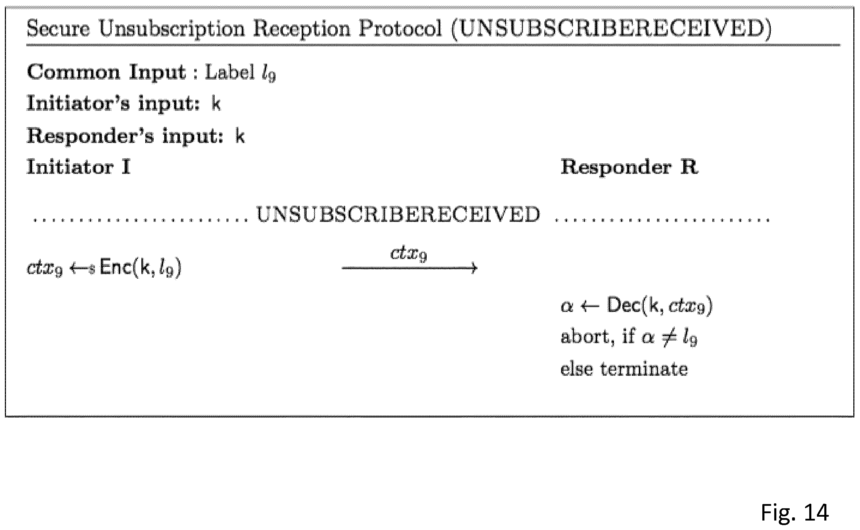

- If $\alpha \neq I_8$ the initiator I aborts with an error.
- Else if $\alpha = I_8$, the initiator I parses uflag. Depending on the value of uflag, the initiator may run UNSUBSCRIBERECEIVED as e.g. shown in Fig. 14, DISCONNECT as e.g. shown in Fig. 15 or terminates.

Fig. 14 shows steps of a secure and subscription reception according to an embodiment of the present invention.

In Fig. 14 a description of a secure unsubscription reception protocol is shown.

The protocol runs between the initiator I and the responder R and comprises the following steps:

1. The initiator I encrypts $I_9$ with $ctx_9 \leftarrow Enc(k, I_9)m$, where $I_9$ is a pre-defined label.

2. The initiator I sends the ciphertext $ctx_9$ to the responder R, and

3. The responder R decrypts the ciphertext $ctx_9$ with his k by running $\alpha \leftarrow Dec(k, ctx_9)$.

- If $\alpha \neq I_9$ the responder R aborts with an error.
- Else if $\alpha = I_9$ the responder R terminates.

Fig. 15 shows steps of a secure disconnection according to an embodiment of the present invention.

In Fig. 15 a description of a secure disconnection protocol is shown.

The protocol runs between the initiator I and the responder R and comprises the following steps:

1. The initiator I encrypts the label $I_{10}$ with $ctx_{10} \leftarrow Enc(k, I_{10})$,

2. The initiator I sends the ciphertext $ctx_{10}$ to the responder R, and

3. The responder R decrypts the ciphertext $ctx_{10}$ with his key k by running $\alpha \leftarrow Dec(k, ctx_{10})$.

- If $\alpha \neq I_{10}$ the responder R aborts with an error.
- Else if $\alpha = I_{10}$ the responder R releases the connection to the insider I.

Labels as mentioned in Figs. 4-15 may be of the form but are not limited to

$I_1 := $ "0x01", $I_2 := $ "0x02", $I_3 := $ "0x03",

$I_4 := $ "0x04", $I_5 := $ "0x05", $I_6 := $ "0x06",

$I_7 := $ "0x07", $I_8 := $ "0x08", $I_9 := $ "0x09",

$I_{10} := $ "0x0A".

The labels $I_1$-$I_{10}$ are here provided in hexadecimal format. Every other format may also be used.

In summary embodiments of the present invention enable or provide

- an execution of a secure messaging protocol, such that eavesdropping, alternation and denial-of-service attacks against remote attackers are prevented, and strong isolation of the mediating broker are guaranteed,
- a secure messaging protocol for establishing (i) a mutually authenticated and (ii) encrypted communication between an infrastructure and a thing,
- to balance the load, a gateway operates as a broker following the publish-subscribe messaging format.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A method for operating a communication network, 'CN', comprising the steps of

- Receiving, by a mediating entity, 'ME', of said CN, a message for a responding entity, 'RE', of said CN, from an initiating entity, 'IE',
- Checking, by said ME, whether said IE is authorized to communicate with said RE based on a list of subscriptions, which represent topics for subscription and which is securely stored in a trusted computing environment, 'TCE', of the ME,
- Establishing a secure message exchange between said ME and said RE using said TCE of said ME and a TCE of said RE,
- Sending, by said ME, at least the content of said message to said RE via said secure connection,
- Processing the contents of said message by said RE,
- Providing, by said RE, a result of the processed message for a topic via said secure connection to said ME,
- Publishing, by said ME, said received result to said IE.

2. The method according to claim 1, wherein successful publishing and/or subscribing is acknowledged by providing back an ack message.

3. The method according to claim 2, wherein message reliability information indicating a level of assurance of the message transmission is included into said ack message.

4. The method according to one of the claims 1-3, wherein a secure message connection between said IE and said ME is established and said message from said IE to said ME is transmitted and/or publishing of said received result is executed via said secure connection.

5. The method according to one of the claims 1-4, wherein publishing is performed by providing a publish message to said ME being authenticated and/or encrypted including topic information and content associated with said topic information.

6. The method according to one of the claims 1-5, wherein subscribing is performed by sending a subscribe message to said ME comprising topic information to be subscribed.

7. The method according to claim 5 or 6, wherein quality of service information is included into said publish message and/or said subscribe message.

8. The method according to one of the claims 1-7, wherein for unsubscribing from a topic a message, preferably via an established secure connection, is sent to said ME comprising topic information for unsubscribing.

9. The method according to one of the claims 1-8, wherein said message for said RE from said IE is evaluated with regard to critical content and wherein if critical content is not determined, the message is directly forwarded to said RE.

10. The method according to one of the claims 1-9, wherein a secure message connection is established by sending a connect message including a digital signature and a trusted certificate, preferably wherein a successful established secure message connection is acknowledged and/or wherein a secure message connection is based on encrypting and decrypting of messages using a symmetric-key authenticated encryption scheme.

11. A mediating entity, 'ME' of a communication network, 'CN', comprising a a trusted computing environment, 'TCE', and being adapted to perform the following steps:

- Receiving a message for a responding entity, 'RE', of said CN, from an initiating entity, 'IE',
- Checking whether said IE is authorized to communicate with said RE based on a list of subscriptions, which represent topics for subscription and which is securely stored in said TCE,
- Establishing a secure message exchange between said ME and said RE using the own TCE and a TCE of said RE,
- Sending at least the content of said message to said RE via said secure message connection,
- Receiving a result of the processed message for a topic via said secure message connection from said RE,
- Publishing said received result to said IE.

12. A method performed by a mediating entity, 'ME' comprising a trusted computing environment, 'TCE', in a communication network, 'CN', comprising the steps of:

- Receiving a message for a responding entity, 'RE', of said CN, from an initiating entity, 'IE',
- Checking whether said IE is authorized to communicate with said RE based on a list of subscriptions, which represent topics for subscription and which is securely stored in said TCE,
- Establishing a secure message exchange between said ME and said RE using the own TCE and a TCE of said RE,
- Sending, at least the content of said message to said RE via said secure message connection,
- Receiving a result of the processed message for a topic via said secure message connection from said RE,

- Publishing said received result to said IE.

**13.** A non-transitory computer readable medium in which instructions are stored which instructions when executed by a processor of a mediating entity, 'ME', comprising a trusted computing environment, 'TCE', in a communication network , 'CN', cause the 'ME' to perform the steps according to claim 12.

**14.** A non-transitory computer readable medium in which instructions are stored which instructions when executed by a processor of an initiating entity, 'IE', a processor of a mediating entity, 'ME' and a processor of a responding entity, 'RE', cause said IE, ME and RE to perform the respective steps according to claim 1.

**15.** A network comprising

- an initiating entity, 'IE' adapted to send a message for a responding entity to a mediating entity,
- a mediating entity, 'ME', according to claim 11 and
- a responding entity, 'RE' comprising a trusted computing environment, 'TCE' and adapted to receive a message from said ME, to provide and process the content of said message using said TCE and to provide a result of the processed message for a topic via a secure message connection to said ME.


**Patentansprüche**

**1.** Verfahren zum Betreiben eines Kommunikationsnetzwerks, ‚CN', umfassend die Schritte

- Erhalten, durch eine Vermittlungsentität, ‚ME', von dem CN einer Nachricht für eine Antwortentität, ‚RE', des CN von einer Initiierungsentität, 'IE',
- Überprüfen, durch die ME, ob die IE autorisiert ist mit der RE zu kommunizieren basierend auf einer Liste von Einschreibungen, die Themen für Einschreibungen repräsentieren und die sicher in einer vertrauenswürdigen Computerumgebung, 'TCE' von der ME gespeichert werden,
- Etablieren eines sicheren Nachrichtenaustauschs zwischen der ME und der RE unter Benutzung des TCE von der ME und einer TCE von der RE,
- Senden, durch die ME, zumindest des Inhalts der Nachricht an die RE über die sichere Nachrichtenverbindung,
- Verarbeiten des Inhalts der Nachricht durch die RE,
- Bereitstellen, durch die RE, eines Ergebnisses der verarbeiteten Nachricht für ein Thema über die sichere Nachrichtenverbindung der ME,
- Bekanntgeben, durch die ME, des erhaltenen Ergebnisses an die IE.

**2.** Verfahren gemäß Anspruch 1, wobei ein erfolgreiches Bekanntgeben und/oder Einschreiben bestätigt wird durch Zurückliefern einer Bestätigungsnachricht.

**3.** Verfahren gemäß Anspruch 2, wobei Nachrichtverlässsichkeitsinformationen, die einen Grad an Verlässlichkeit der Nachrichtenübertragung anzeigen, in die Bestätigungsnachricht eingebracht werden.

**4.** Verfahren gemäß einem der Ansprüche 1-3, wobei eine sichere Nachrichtenverbindung zwischen der IE und der ME aufgebaut wird und die Nachricht von der IE zu der ME übertragen wird und/oder wobei das Bekanntgeben des erhaltenen Ergebnisses über die sichere Verbindung ausgeführt wird.

**5.** Verfahren gemäß einem der Ansprüche 1-4, wobei das Bekanntgeben durch Bereitstellen einer Bekanntgabenachricht an die ME durchgeführt wird, die authentifiziert und/oder verschlüsselt wird, umfassend Themainformationen und Inhalt, der mit den Themainformationen verbunden ist.

**6.** Verfahren gemäß einem der Ansprüche 1-5, wobei das Einschreiben durch Senden einer Einschreibenachricht an die ME durchgeführt wird, umfassend Themainformationen, mit denen eingeschrieben werden soll.

**7.** Verfahren gemäß einem der Ansprüche 1-6, wobei die Qualität von Serviceinformationen in die Veröffentlichungsnachricht und/oder die Einschreibenachricht aufgenommen wird.

**8.** Verfahren gemäß einem der Ansprüche 1-7, wobei zum Abbestellen eines Themas eine Nachricht, vorzugsweise über eine aufgebaute sichere Verbindung, zu der ME gesendet wird, umfassend Themainformationen zum Abbestellen.

**9.** Verfahren gemäß einem der Ansprüche 1-8, wobei die Nachricht für die RE von der IE ausgewertet wird in Bezug auf kritischen Inhalt und wobei wenn kein kritischer Inhalt festgestellt wird, die Nachricht direkt an die RE weitergeleitet wird.

**10.** Verfahren gemäß einem der Ansprüche 1-9, wobei eine sichere Nachrichtenverbindung aufgebaut wird durch Senden einer Verbindungsnachricht umfassend eine digitale Signatur und ein vertrauenswürdiges Zertifikat, vorzugsweise wobei eine erfolgreich aufgebaute sichere Nachrichtenverbindung bestätigt wird und/oder wobei eine sichere Nachrichtenverbindung auf der Verschlüsselung und Entschlüsselung von Nachrichten unter Benutzung eines authentifizierten Verschlüsselungsschemas mit symmetrischen Schlüsseln basiert.

11. Eine Vermittlungsentität, ‚ME' eines Kommunikationsnetzwerks, ‚CN', umfassend eine vertrauenswürdige Computerumgebung, ‚TCE', und ausgebildet die folgenden Schritte durchzuführen:

   - Erhalten einer Nachricht von dem CN für eine Antwortentität, ‚RE' von einer Initiierungsentität, 'IE',
   - Überprüfen, ob die IE autorisiert ist, mit der RE zu kommunizieren basierend auf einer Liste von Einschreibungen, die Themen für Einschreibungen repräsentieren und die sicher in der TCE gespeichert werden,
   - Etablieren eines sicheren Nachrichtenaustauschs zwischen der ME und der RE unter Benutzung des eigenen TCE und einer TCE von der RE,
   - Senden zumindest des Inhalts der Nachricht an die RE über die sichere Nachrichtenverbindung,
   - Empfangen eines Ergebnisses der verarbeiteten Nachricht für ein Thema über die sichere Nachrichtenverbindung von der RE,
   - Bekanntgeben des erhaltenen Ergebnisses an die IE.

12. Verfahren durchgeführt von einer Vermittlungsentität, ‚ME', umfassend eine vertrauenswürdige Computerumgebung, ‚TCE', in einem Kommunikationsnetzwerk, 'CN', umfassend die Schritte

   - Erhalten einer Nachricht von dem CN für eine Antwortentität, ‚RE' von einer Initiierungsentität, 'IE',
   - Überprüfen, ob die IE autorisiert ist, mit der RE zu kommunizieren basierend auf einer Liste von Einschreibungen, die Themen für Einschreibungen repräsentieren und die sicher in der TCE gespeichert werden,
   - Etablieren eines sicheren Nachrichtenaustauschs zwischen der ME und der RE unter Benutzung des eigenen TCE und einer TCE von der RE,
   - Senden zumindest des Inhalts der Nachricht an die RE über die sichere Nachrichtenverbindung,
   - Empfangen eines Ergebnisses der verarbeiteten Nachricht für ein Thema über die sichere Nachrichtenverbindung von der RE,
   - Bekanntgeben des erhaltenen Ergebnisses an die IE.

13. Nichtflüchtiges computerlesbares Medium auf dem Instruktionen gespeichert sind, die, wenn sie auf einem Prozessor einer Vermittlungsentität, ‚ME', umfassend eine vertrauenswürdige Computerumgebung, ‚TCE', in einem Kommunikationsnetzwerk, , CN', ausgeführt werden, die ME veranlassen, die Schritte gemäß Anspruch 12 durchzuführen.

14. Nicht-flüchtiges computerlesbares Medium auf dem Instruktionen gespeichert sind, die, wenn sie auf einem Prozessor einer Initiierungsentität, 'IE', einem Prozessor einer Vermittlungsentität, ‚ME' und einem Prozessor einer Antwortentität, 'RE', ausgeführt werden, die IE, die ME und die RE veranlassen, die entsprechenden Schritte gemäß Anspruch 1 durchzuführen.

15. Netzwerk, umfassend

   - eine Initiierungsentität, IE' ausgebildet zum Senden einer Nachricht für eine Antwortentität zu einer Vermittlungsentität,
   - eine Vermittlungsentität, ME', gemäß Anspruch 11,
   - eine Antwortentität, umfassend eine vertrauenswürdige Computerumgebung, 'TCE', und ausgebildet um eine Nachricht von der ME zu empfangen, um den Inhalt einer Nachricht bereitzustellen und zu verarbeiten unter Benutzung des TCE und um ein Ergebnis einer verarbeiteten Nachricht für ein Thema der ME bereitzustellen über eine sichere Nachrichtenverbindung.

**Revendications**

1. Procédé de fonctionnement d'un réseau de communication, « CN », le procédé comprenant les étapes ci-dessous consistant à :

   - recevoir, par le biais d'une entité médiatrice, « ME », dudit réseau CN, un message pour une entité répondante, « RE », dudit réseau CN, en provenance d'une entité initiatrice, « IE » ;
   - vérifier, par le biais de ladite entité ME, si ladite entité IE est autorisée à communiquer avec ladite entité RE sur la base d'une liste d'abonnements qui représente des thèmes d'abonnement et qui est stockée de manière sécurisée dans un environnement informatique de confiance, « TCE », de l'entité ME ;
   - établir un échange de messages sécurisé entre ladite entité ME et ladite entité RE, en utilisant ledit environnement TCE de ladite entité ME et un environnement TCE de ladite entité RE ;
   - envoyer, par le biais de ladite entité ME, au moins le contenu dudit message, à ladite entité RE, par l'intermédiaire de ladite connexion de messagerie sécurisée ;
- traiter le contenu dudit message, par le biais de ladite entité RE ;
- fournir, par le biais de ladite entité RE, un résultat du message traité pour un thème, par l'intermédiaire de ladite connexion de messagerie sécurisée, à ladite entité ME ; et
- publier, par le biais de ladite entité ME, ledit résultat reçu, à ladite entité IE.

**2.** Procédé selon la revendication 1, dans lequel une publication réussie et/ou un abonnement réussi sont confirmés par le renvoi d'un message d'accusé de réception.

**3.** Procédé selon la revendication 2, dans lequel des informations de fiabilité de message indiquant un niveau de garantie de la transmission de message sont incluses dans ledit message d'accusé de réception.

**4.** Procédé selon l'une quelconque des revendications 1 à 3, dans lequel une connexion de messagerie sécurisée, entre ladite entité IE et ladite entité ME, est établie, et ledit message, de ladite entité IE à ladite entité ME, est transmis, et/ou la publication dudit résultat reçu est exécutée par l'intermédiaire de ladite connexion de messagerie sécurisée.

**5.** Procédé selon l'une quelconque des revendications 1 à 4, dans lequel la publication est mise en œuvre en fournissant un message de publication, à ladite entité ME, qui est authentifié et/ou chiffré en incluant des informations de thème et du contenu associé auxdites informations de thème.

**6.** Procédé selon l'une quelconque des revendications 1 à 5, dans lequel l'abonnement est mis en œuvre en envoyant un message d'abonnement, à ladite entité ME, comprenant des informations de thème à souscrire.

**7.** Procédé selon la revendication 5 ou 6, dans lequel des informations de qualité de service sont incluses dans ledit message de publication et/ou dans ledit message d'abonnement.

**8.** Procédé selon l'une quelconque des revendications 1 à 7, dans lequel, pour se désabonner d'un thème, un message, de préférence par l'intermédiaire d'une connexion de messagerie sécurisée établie, est envoyé à ladite entité ME, comprenant des informations de thème en vue d'un désabonnement.

**9.** Procédé selon l'une quelconque des revendications 1 à 8, dans lequel ledit message pour ladite entité RE, en provenance de ladite entité IE, est évalué en ce qui concerne du contenu critique, et dans lequel, si aucun contenu critique n'est déterminé, le message est acheminé directement vers ladite entité RE.

**10.** Procédé selon l'une quelconque des revendications 1 à 9, dans lequel une connexion de messagerie sécurisée est établie en envoyant un message de connexion incluant une signature numérique et un certificat de confiance, de préférence dans lequel une connexion de messagerie sécurisée correctement établie est confirmée par accusé de réception, et/ou dans lequel une connexion de messagerie sécurisée est basée sur un chiffrement et un déchiffrement de messages au moyen d'un schéma de chiffrement authentifié par clé symétrique.

**11.** Entité médiatrice, « ME », d'un réseau de communication, « CN », comprenant un environnement informatique de confiance, « TCE », et laquelle est apte à mettre en œuvre les étapes ci-dessous consistant à :

- recevoir un message pour une entité répondante, « RE », dudit réseau CN, en provenance d'une entité initiatrice, « IE » ;
- vérifier si ladite entité IE est autorisée à communiquer avec ladite entité RE sur la base d'une liste d'abonnements qui représente des thèmes d'abonnement et qui est stockée de manière sécurisée dans ledit environnement TCE ;
- établir un échange de messages sécurisé entre ladite entité ME et ladite entité RE, en utilisant ledit propre environnement TCE et un environnement TCE de ladite entité RE ;
- envoyer au moins le contenu dudit message, à ladite entité RE, par l'intermédiaire de ladite connexion de messagerie sécurisée ;
- recevoir un résultat du message traité pour un thème, par l'intermédiaire de ladite connexion de messagerie sécurisée, en provenance de ladite entité RE ; et
- publier ledit résultat reçu à ladite entité IE.

**12.** Procédé mis en œuvre par une entité médiatrice, « ME », comprenant un environnement informatique de confiance, « TCE », dans un réseau de communication, « CN », le procédé comprenant les étapes ci-dessous consistant à :

- recevoir un message pour une entité répondante, « RE », dudit réseau CN, en provenance d'une entité initiatrice, « IE » ;
- vérifier si ladite entité IE est autorisée à communiquer avec ladite entité RE sur la base d'une liste d'abonnements qui représente des thèmes d'abonnement et qui est stockée de manière sécurisée dans ledit environnement TCE ;
- établir un échange de messages sécurisé entre ladite entité ME et ladite entité RE, en utilisant ledit propre environnement TCE et un environnement TCE de ladite entité RE ;
- envoyer au moins le contenu dudit message, à ladite entité RE, par l'intermédiaire de ladite connexion de messagerie sécurisée ;
- recevoir un résultat du message traité pour un thème, par l'intermédiaire de ladite connexion de messagerie sécurisée, en provenance de ladite entité RE ; et
- publier ledit résultat reçu à ladite entité IE.

13. Support non transitoire lisible par ordinateur dans lequel des instructions sont stockées, lesquelles instructions, lorsqu'elles sont exécutées par un processeur d'une entité médiatrice, « ME », comprenant un environnement informatique de confiance, « TCE », dans un réseau de communication, « CN », amènent l'entité médiatrice, « ME », à mettre en œuvre les étapes selon la revendication 12.

14. Support non transitoire lisible par ordinateur dans lequel des instructions sont stockées, lesquelles instructions, lorsqu'elles sont exécutées par un processeur d'une entité initiatrice, « IE », un processeur d'une entité médiatrice, « ME », et un processeur d'une entité répondante, « RE », amènent ladite entité IE, ladite entité ME et ladite entité RE à mettre en œuvre les étapes respectives selon la revendication 1.

15. Réseau comprenant :

   - une entité initiatrice, « IE », apte à envoyer un message pour une entité répondante à une entité médiatrice ;
   - une entité médiatrice, « ME », selon la revendication 11 ; et
   - une entité répondante, « RE », comprenant un environnement informatique de confiance, « TCE », et apte à recevoir un message en provenance de ladite entité ME, à fournir et à traiter le contenu dudit message, en utilisant ledit environnement TCE, et à fournir un résultat du message traité, pour un thème, par l'intermédiaire d'une connexion de messagerie sécurisée à ladite entité ME.

Fig. 1

Infrastructure C    Gateway G    Sensor S

Trusted Sensor App

Crypto    Crypto

Trusted Proxy Broker    Trusted Client

Secure Messaging Layer    Secure Messaging Layer

Transport Layer    Transport Layer

Network Layer    Network Layer

Physical/Data Link Layer    Physical/Data Link Layer

subscribe

publish

secure world    normal world

Fig. 2

□ — 1

↓

□ — 2

↓

□ — 3

↓

□ — 4

↓

□ — 5

↓

□ — 6

↓

...

...

□ — 7

↓

□ — 8

↓

□ — 9

↓

□ — 10

↓

□ — 11

↓

□ — 12

↓

□ — 13

↓

□ — 14          a)

Fig. 3

Fig. 3

**Secure Messaging Establishment Protocol (CONNECT)**

**Common Input** : $vk_{CA}$

**Initiator's input:** $sk_I, cert_I = (vk_I, \sigma_I^{CA})$

**Responder's input:** $sk_R, cert_R = (vk_R, \sigma_R^{CA})$

**Initiator I**                                                         **Responder R**

$\dots\dots\dots\dots\dots\dots\dots\dots\dots\dots\dots\dots$ CONNECT $\dots\dots\dots\dots\dots\dots\dots\dots\dots\dots$

$x \xleftarrow{} \mathbb{Z}_p$

$\sigma_I \leftarrow \mathsf{Sig}(sk_I, g^x)$

$$\xrightarrow{\quad g^x, \sigma_I, cert_I \quad}$$

parse $cert_I$ as $(vk_I, \sigma_I^{CA})$

abort, if

(1) $\mathsf{Vf}(vk_{CA}, vk_I^{CA}, \sigma_I^{CA}) \neq 1$

(2) $\mathsf{Vf}(vk_I, g^x, \sigma_I) \neq 1$

else, respond with

CONNECTACK

Fig. 4

---

**Secure Messaging Acknowledgement Protocol (CONNECTACK)**

---

**Common Input** : $vk_{CA}$

**Initiator's input:** $sk_I, cert_I = (vk_I, \sigma_I^{CA})$

**Responder's input:** $sk_R, cert_R = (vk_R, \sigma_R^{CA})$

**Initiator I**                                                     **Responder R**

................................ CONNECTACK .........................

$$y \leftarrow \$ \mathbb{Z}_p$$
$$\sigma_R \leftarrow Sig(sk_R, g^y)$$
$$\text{set } k = g^{xy}$$

$$\xleftarrow{\quad g^y, \sigma_R, cert_R \quad}$$

abort, if

(1) $Vf(vk_{CA}, vk_R^{CA}, \sigma_I^{CA}) \neq 1$

(2) $Vf(vk_R, g^y, \sigma_R) \neq 1$

else, set $k = g^{xy}$

(optionally) respond with

PUBLISH or SUBSCRIBE

Fig. 5

**Secure Publication Protocol (PUBLISH)**

**Common Input** : Label $l_1$

**Initiator's input:** $k$ and publication message *pubm*

**Responder's input:** $k$

**Initiator I**                                                                 **Responder R**

............................................PUBLISH............................................

$ctx_1 \leftarrow_\$ \mathsf{Enc}(k, l_1|pubm)$ $\xrightarrow{\quad ctx_1 \quad}$

$(\alpha, pubm) \leftarrow \mathsf{Dec}(k, ctx_1)$
abort, if $\alpha \neq l_1$
else store *pubm*
and (optionally) respond with
PUBLISHACK or terminate

Fig. 6

EP 3 429 166 B1

**Secure Publication Acknowledgment Protocol (PUBLISHACK)**

**Common Input** : Label $l_2$

**Initiator's input:** k

**Responder's input:** k and publication flag $pflag$

**Initiator I**                                             **Receiver/R**

$\dots\dots\dots\dots\dots\dots\dots\dots\dots\dots\dots\dots$ PUBLISHACK $\dots\dots\dots\dots\dots\dots\dots\dots\dots\dots$

$$ctx_2 \leftarrow \mathsf{Enc}(\mathsf{k}, l_2 | pflag)$$

$$\xleftarrow{\quad ctx_2 \quad}$$

$(\beta, pflag) \leftarrow \mathsf{Dec}(\mathsf{k}, ctx_2)$

abort, if $\alpha \neq l_2$

else respond with with PUBLISHRECEIVED,

DISCONNECT or terminate

Fig. 7

## Secure Publication Reception Protocol (PUBLISHRECEIVED)

**Common Input** : Label $l_3$

**Initiator's input:** k

**Responder's input:** k

**Initiator I**                                                            **Responder R**

$\dots\dots\dots\dots\dots\dots\dots$ PUBLISHRECEIVED $\dots\dots\dots\dots\dots\dots$

$ctx_3 \leftarrow_{\$} \mathsf{Enc}(k, l_3)$          $\xrightarrow{\quad ctx_3 \quad}$

$\quad\quad\quad\quad\quad\quad\quad\quad\quad\quad\quad\quad\quad\quad\quad\quad\quad\quad\quad\quad \alpha \leftarrow \mathsf{Dec}(k, ctx_3)$

$\quad\quad\quad\quad\quad\quad\quad\quad\quad\quad\quad\quad\quad\quad\quad\quad\quad\quad\quad\quad$ abort, if $\alpha \neq l_1$

$\quad\quad\quad\quad\quad\quad\quad\quad\quad\quad\quad\quad\quad\quad\quad\quad\quad\quad\quad\quad$ else terminate

Fig. 8

**Secure Subscription Protocol (SUBSCRIBE)**

**Common Input** : Label $l_4$

**Initiator's input:** $k$ and subscription *subm*

**Responder's input:** $k$

Initiator I                                                                 Responder R

. . . . . . . . . . . . . . . . . . . . . . . . . . . . . . . . . . . . SUBSCRIBE . . . . . . . . . . . . . . . . . . . . . . . . . . . . . . . . . . . . . . . .

$ctx_4 \leftarrow_\$ \mathsf{Enc}(k, l_4|subm)$                $\xrightarrow{\quad ctx_4 \quad}$

$(\alpha, subm) \leftarrow \mathsf{Dec}(k, ctx_4)$

abort, if $\alpha \neq l_4$

else store *subm*

and (optionally) respond with

SUBSCRIBEACK or terminate

Fig. 9

Secure Subscription Acknowledgment Protocol (SUBSCRIBEACK)

**Common Input** : Label $l_5$

**Initiator's input:** k

**Responder's input:** k and subscription flag $sflag$

**Initiator I**                                                                 **Receiver R**

................................SUBSCRIBEACK....................................

$$ctx_5 \leftarrow \mathsf{Enc}(\mathsf{k}, l_5 | sflag)$$

$$\xleftarrow{\quad ctx_5 \quad}$$

$(\alpha, sflag) \leftarrow \mathsf{Dec}(\mathsf{k}, ctx_5)$

abort, if $\alpha \neq l_5$

else respond with with SUBSCRIBERECEIVED,

DISCONNECT or terminate

Fig. 10

EP 3 429 166 B1

---

### Secure Subscription Reception Protocol (SUBSCRIBERECEIVED)

**Common Input** : Label $l_6$

**Initiator's input:** k

**Responder's input:** k

**Initiator I**                                                                                    **Responder R**

...................................SUBSCRIBERECEIVED ........................

$ctx_6 \leftarrow_s \mathsf{Enc}(k, l_6)$         $\xrightarrow{\quad ctx_6 \quad}$

                                                                   $\alpha \leftarrow \mathsf{Dec}(k, ctx_6)$

                                                                   abort, if $\alpha \neq l_6$

                                                                   else terminate

Fig. 11

EP 3 429 166 B1

Secure Unsubscription Protocol (UNSUBSCRIBE)

**Common Input** : Label $l_7$

**Initiator's input:** $k$ and unsubscription *unsubm*

**Responder's input:** $k$

**Initiator I**                                                                **Responder R**

........................................ UNSUBSCRIBE .........................................

$ctx_7 \leftarrow \mathsf{Enc}(k, l_7 | unsubm)$          $\xrightarrow{\quad ctx_7 \quad}$

                                                                              $(\alpha, unsubm) \leftarrow \mathsf{Dec}(k, ctx_7)$

                                                                              abort, if $\alpha \neq l_7$

                                                                              else unsubscribe *unsubm*

                                                                              and (optionally) respond with

                                                                              UNSUBSCRIBEACK or terminate

Fig. 12

**Secure Unsubscription Acknowledgment Protocol (UNSUBSCRIBEACK)**

**Common Input** : Label $l_8$

**Initiator's input:** k

**Responder's input:** k and unsubscription flag $uflag$

**Initiator I**                                                    **Receiver R**

. . . . . . . . . . . . . . . . . . . . . . . . . . . . . . . . . .UNSUBSCRIBEACK. . . . . . . . . . . . . . . . . . . . . . . . . . . . . . . . .

$ctx_8 \leftarrow \mathsf{Enc}(\mathsf{k}, l_8 | uflag)$

$\xleftarrow{\quad ctx_8 \quad}$

$(\alpha, uflag) \leftarrow \mathsf{Dec}(\mathsf{k}, ctx_8)$

abort, if $\alpha \neq l_8$

else respond with with UNSUBSCRIBERECEIVED,

DISCONNECT or terminate

Fig. 13

Secure Unsubscription Reception Protocol (UNSUBSCRIBERECEIVED)

**Common Input** : Label $l_9$

**Initiator's input:** k

**Responder's input:** k

**Initiator I**                                                                                  **Responder R**

$\ldots\ldots\ldots\ldots\ldots\ldots\ldots\ldots$ UNSUBSCRIBERECEIVED $\ldots\ldots\ldots\ldots\ldots\ldots\ldots$

$ctx_9 \leftarrow_s \mathsf{Enc}(\mathsf{k}, l_9)$                           $\xrightarrow{\quad ctx_9 \quad}$

                                                                                                 $\alpha \leftarrow \mathsf{Dec}(\mathsf{k}, ctx_9)$

                                                                                                 abort, if $\alpha \neq l_9$

                                                                                                 else terminate

Fig. 14

**Secure Disconnection Protocol (DISCONNECT)**

**Common Input** : Label $l_{10}$

**Initiator's input:** $k$

**Responder's input:** $k$

**Initiator I**                                              **Responder R**

$\dots\dots\dots\dots\dots\dots\dots\dots$DISCONNECT$\dots\dots\dots\dots\dots\dots\dots\dots\dots$

$ctx_{10} \leftarrow_s \mathsf{Enc}(k, l_{10})$  $\xrightarrow{\quad ctx_{10} \quad}$

$(\alpha) \leftarrow \mathsf{Dec}(k, ctx_{10})$

abort, if $\alpha \neq l_{10}$

else release $I$

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5815665 A
- US 20140172721 A1
- US 2006200444 A1
- US 2016366111 A1
- WO 2016057347 A1

### Non-patent literature cited in the description

- Revised Selected Papers. Information Security - 13th International Conference. 25 October 2010, vol. 6531
- Lecture Notes in Computer Science. Springer, 2010, 84798
- Trusted Computing, Second International Conference. 06 April 2009
- Proceedings, volume 5471 of Lecture Notes in Computer Science. Springer, 2009, vol. 5471, 1977216
- Secure MQTT for Internet of Things (IoT). **MEENA SINGH ; RAJAN MA ; SHIVRAJ VL ; BALAMU-RALIDHAR P.** Fifth International Conference on Communication Systems and Network Technologies. 2015